# EUROPEAN PATENT SPECIFICATION

(11) **EP 3 314 618 B1**
(45) Date of publication and mention of the grant of the patent: **26.02.2020**
(21) Application number: 16739525.0
(22) Date of filing: 23.06.2016
(51) Int. Cl.: H01F 7/02, F16C 32/04

(54) **A MAGNETIC ACTUATOR FOR A MAGNETIC SUSPENSION SYSTEM**
MAGNETISCHER AKTUATOR FÜR EIN MAGNETISCHES AUFHÄNGUNGSSYSTEM
ACTIONNEUR MAGNÉTIQUE POUR SYSTÈME DE SUSTENTATION MAGNÉTIQUE

(30) Priority: 26.06.2015 FI 20155507
(43) Date of publication of application: 02.05.2018
(73) Proprietor: Lappeenrannan-Lahden teknillinen yliopisto LUT, 53851 Lappeenranta (FI)
(72) Inventor: JASTRZEBSKI, Rafal Piotr, 53851 Lappeenranta (FI); SMIRNOV, Alexander, 53851 Lappeenranta (FI); PYRHÖNEN, Olli, 53851 Lappeenranta (FI)
(74) Representative: Finnpatent Oy
(86) International application number: PCT/FI2016/050460
(87) International publication number: WO 2016/207492

(56) References cited:
- EP-A2- 1 655 820
- EP-A2- 2 608 359
- US-A1- 2006 238 053
- US-A1- 2008 272 664
- US-A1- 2013 049 494

## Description

### Field of the disclosure

The disclosure relates to a magnetic suspension system that can be, for example but not necessarily, an active magnetic bearing "AMB".

### Background

Magnetic suspension systems, such as e.g. active magnetic bearings "AMB", are commonly known in the art. Magnetic suspension systems are commonly utilized for supporting e.g. rotating or oscillating objects. In many cases, the support at each direction is obtained by balancing attractive forces of two opposite acting magnets and other forces acting on an object to be suspended, where at least one of the magnets is a controllable electromagnet. In principle, it is also possible to balance an attractive force of one controllable electromagnet and other forces, e.g. the gravity force, acting against the attractive force of the electromagnet. The magnetic forces acting in all or some degrees of freedom of the suspended object, e.g. a rotor of an electrical machine, have to be controlled actively because of the inherent instability of the magnetic suspension. The instability is due to the fact that the magnetic attractive force acting between a magnet and an object made of e.g. ferromagnetic material increases when the air-gap between the magnet and the object gets smaller. There are several different kinds of magnetic suspension systems. Some systems use permanent magnets to generate bias magnetic fluxes, others use direct biasing currents to generate the bias fluxes. The biasing is used to overcome static loads, to increase the possible rates of change of magnetic forces, and to linearize the magnetic force dependence on control variables.

In many cases, a magnetic actuator of a magnetic suspension system comprises actuator elements each of which comprises a winding for conducting electric currents and a core element for conducting magnetic flux. In order to avoid adverse eddy currents, the core element is often a stack of ferromagnetic sheets that are electrically insulated from each other and the geometry of the core element is designed so that the magnetic flux caused by the electric currents does not need to penetrate the ferromagnetic sheets but the magnetic flux flows along the ferromagnetic sheets. It is also possible to use for example ferrite as the material of the core element but in many cases the stack structure is more cost effective, mechanically stronger, and has better magnetic properties. As the control of the magnetic suspension system should be as straightforward as possible, there is an endeavor to design the actuator elements to provide flux decoupling such that magnetic flux generated by electric current in one actuator element does not significantly flow to other actuator elements. In other words, there is an endeavor to avoid magnetic coupling between the actuator elements.

In many cases where the above-mentioned permanent magnet biasing is used and the magnetic actuator of a magnetic suspension system comprises actuator elements of the kind mentioned above, the following objectives are tried to be met. Firstly, the magnetic fluxes caused by electric currents should not need to penetrate the ferromagnetic sheets of the core elements but the magnetic fluxes should flow along the ferromagnetic sheets. Secondly, the magnetic fluxes caused by the permanent magnets should not need to penetrate the ferromagnetic sheets but also these magnetic fluxes should flow along the ferromagnetic sheets because the magnetic fluxes caused by the permanent magnets vary when the reluctances of the magnetic circuits involving the permanent magnets vary, e.g. due to varying air-gaps. Thirdly, the actuator elements should provide the above-mentioned flux decoupling.

Publication US2003222747 describes a current transformer to be installed around a current-carrying conductor. The transformer has a split core with two parts, which can be opened to allow the transformer to be installed around or removed from the current-carrying conductor. A winding wound on the core is operatively connected to a switch so that the winding can be shorted prior to opening the split core when the transformer is removed from the current-carrying conductor in order to reduce the magnetic force holding the split core parts together. The winding is shorted by the switch prior to closing the split core parts when the transformer is installed around the conductor in order to avoid damaging to the core due to induced magnetic force thereon.

Publication EP1 655 820 discloses a rotary motor and a rotary magnetic bearing are integrated in a compact assembly that is contact-less. A stator assembly surrounds a ferromagnetic rotor with an annular air gap which can accommodate a cylindrical wall, e.g. of a chamber for semiconductor wafer processing. The stator assembly has a permanent magnet or magnets sandwiched between vertically spaced magnetic stator plates with plural pole segments. The rotor is preferably a ring of a magnetic stainless steel with complementary pole teeth. The stator assembly (i) levitates and passively centers the rotor along a vertical axis and against tilt about either horizontal axis, (ii) provides a radial position bias for the rotor, and (iii) establishes a motor flux field at the rotor poles. Polyphase coils wound on the stator plates produce a rotating flux field that drives the rotor as a synchronous homopolar motor. A rotor without pole teeth allows operation with an asynchronous inductive drive.

A controller energizes control coils wound on each stator pole segment in response to a sensed physical position of the rotor. The control coils provide active radial position control and can actively damp tip and tilt oscillations that may overcome the passive centering.

Publication US20130049494 describes a switched reluctance motor that comprises: a salient pole stator that includes a plurality of teeth having a coil wound therearound and a magnet mounted between the teeth, and a salient pole rotor that is inserted into a central portion of the stator and rotates.

### Summary

The following presents a simplified summary in order to provide a basic understanding of some aspects of various invention embodiments. The summary is not an extensive overview of the invention. It is neither intended to identify key or critical elements of the invention nor to delineate the scope of the invention. The following summary merely presents some concepts of the invention in a simplified form as a prelude to a more detailed description of exemplifying embodiments of the invention.

In accordance with the invention, there is provided a new magnetic suspension system that can be, for example but not necessarily, an active magnetic bearing "AMB".

A magnetic suspension system according to the invention comprises:
- an object having rotational symmetry, the object having a geometric circular cylinder surface or a geometric circular cone surface,
- at least one magnetic actuator for magnetically suspending the object,
- equipment for generating a position signal indicative of the position of the object with respect to the reference position of the object, and
- a controller for controlling the electrical operation of the windings of the magnetic actuator on the basis of the position signal.

The magnetic actuator comprises actuator elements each of which comprises a winding for conducting electric current and a core element comprising material having the relative magnetic permeability greater than one, µᵣ > 1. The core element of each of the actuator elements comprises:
- tooth sections for directing a magnetic flux produced by the electric current to the object to be controlled with the magnetic actuator, the tooth sections comprising a center tooth section and side tooth sections on both sides of the center tooth section and the winding of the actuator element being wound around the center tooth section only, and
- a yoke section connecting the center and side tooth sections.

The magnetic actuator further comprises permanent magnets located in gaps between the yoke sections of adjacent ones of the actuator elements. The direction of magnetization of each of the permanent magnets is across the gap in which the permanent magnet under consideration is located, and each of the permanent magnets produces a magnetic flux flowing via adjacent ones of the yoke sections the gap between which contains the permanent magnet under consideration. The core elements constitute a ring structure around the rotationally symmetric object so that the tooth sections are radially directed, the yoke sections are circumferentially directed, and the gaps between the yoke sections of the adjacent ones of the core elements are circumferential, wherein the directions of magnetization of the permanent magnets are circumferential. The yoke section and the center and side tooth sections constitute a part of a closed path of the above-mentioned magnetic flux produced by the electric current so that the closed path is outside the one or more permanent magnets. Thus, the above-mentioned magnetic flux produced by the electric current does not have to flow through permanent magnet material whose magnetic permeability is typically significantly lower than that of the material of the core element.

As there are the above-mentioned center and side tooth sections in each core element, decoupling is achieved so that magnetic flux caused by electric current in one actuator element does not significantly flow to other actuator elements. The magnetic fluxes produced by the permanent magnets represent bias magnetic fluxes which make the operation of the magnetic actuator more linear. As the direction of magnetization of each permanent magnet is across the gap that is between adjacent ones of the actuator elements and that contains the permanent magnet under consideration, it is straightforward to arrange a situation where not only the magnetic fluxes caused by the electric currents but also the bias magnetic fluxes flow along ferromagnetic sheets in a case where the core element is a stack of the ferromagnetic sheets.

A number of examples and embodiments of the invention are described in accompanied dependent claims.

Various exemplifying and non-limiting embodiments of the invention both as to constructions and to methods of operation, together with additional objects and advantages thereof, will be best understood from the following description of specific exemplifying and non-limiting embodiments when read in connection with the accompanying drawings.

### Brief description of the figures

Exemplifying and non-limiting embodiments of the invention and their advantages are explained in greater detail below in the sense of examples and with reference to the accompanying drawings, in which:
figures 1a and 1b illustrate a magnetic suspension system according to an embodiment of the invention,
figures 2a and 2b illustrate a magnetic suspension system according to an embodiment of the invention, and
figure 3 illustrates an exemplifying magnetic actuator for a magnetic suspension system.
figures 4a and 4b illustrate an exemplifying magnetic actuator, and
figure 5 illustrates an exemplifying magnetic actuator.

### Description of examples and embodiments

The specific examples provided in the description below should not be construed as limiting the scope and/or the applicability of the accompanied claims.

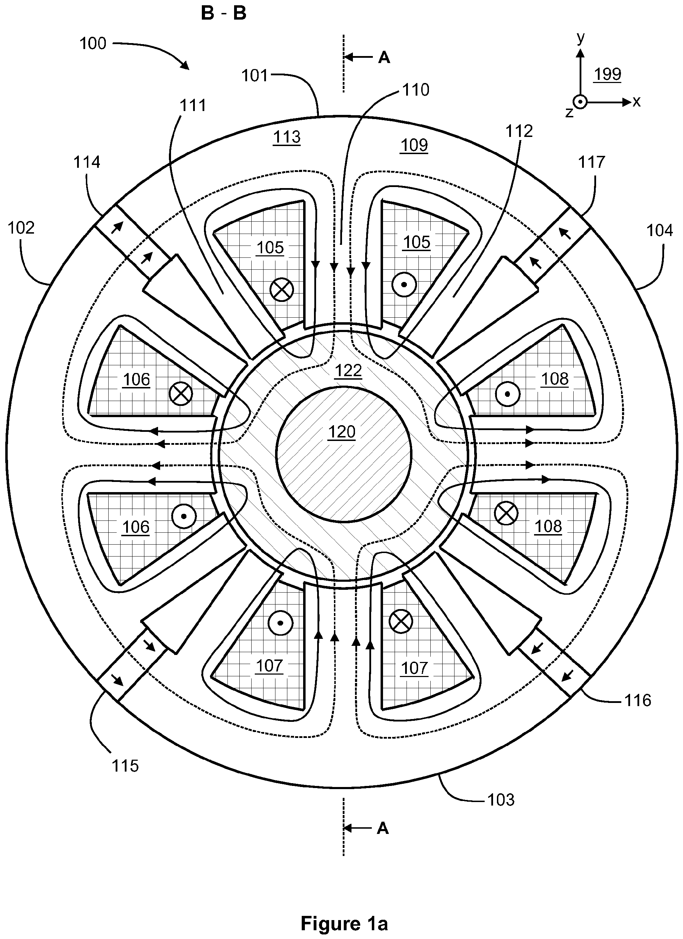

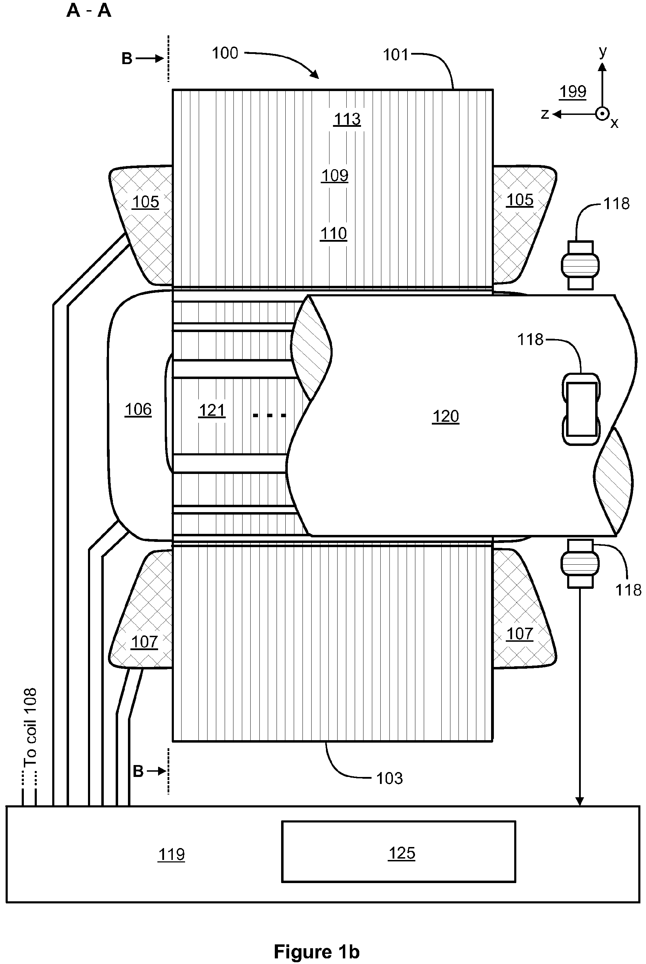

Figures 1a and 1b illustrate a magnetic suspension system according to an embodiment of the invention. Figure 1a shows a view of a section taken along a line B-B shown in figure 1b, and figure 1b shows a view of a section taken along a line A-A shown in figure 1a. The section plane corresponding to figure 1a is parallel with the xy-plane of a coordinate system 199, and the section plane corresponding to figure 1b is parallel with the yz-plane of the coordinate system 199. The magnetic suspension system comprises a magnetic actuator 100 for magnetically suspending an object 120. In the exemplifying case illustrated in figures 1a and 1b, the magnetic suspension system is a radial magnetic bearing for supporting the object 120 in radial directions perpendicular to the axis of rotational symmetry of the object 120. The axis of rotational symmetry is parallel with the z-axis of the coordinate system 199. The magnetic actuator 100 comprises actuator elements 101, 102, 103, and 104. Each of the actuator elements comprises a winding for conducting electric current and a core element comprising material whose relative magnetic permeability is greater than one, µᵣ > 1. In figure 1a, the windings of the actuator elements are denoted with reference numbers 105, 106, 107, and 108, and the core element of the actuator element 101 is denoted with a reference number 109. Each core element comprises a center tooth section, side tooth sections on both sides of the center tooth section, and a yoke section connecting the center tooth section and the side tooth sections. Thus, in this case, each core element is substantially an E-core. In figures 1a and 1b, the center tooth section of the core element 109 is denoted with a reference number 110 and the yoke section of the core element 109 is denoted with a reference number 113. In figure 1a, the side tooth sections of the core element 109 are denoted with reference numbers 111 and 112. The winding of each actuator element is wound around the center tooth section of the core element that belongs to the actuator element under consideration. In the case illustrated in figures 1a and 1b, the end-surfaces of the center tooth sections and the end-surfaces of the side tooth sections are shaped to be congruent with a geometric circular cylinder surface so as to provide smooth air-gaps with the rotationally symmetric object 120. In figure 1b, the end-surface of the center tooth section of the core element of the actuator element 102 is denoted with a reference number 121. The magnetic actuator 100 further comprises permanent magnets 114, 115, 116, and 117 that are located in gaps between the yoke sections of adjacent ones of the core elements. For example, the permanent magnet 114 is located in the gap between the yoke sections of the core elements that belong to the actuator elements 101 and 102. The direction of magnetization of each of the permanent magnets is across the gap in which the permanent magnet under consideration is located. In figure 1a, the directions of magnetization of the permanent magnets 114-117 are depicted with arrows shown on the permanent magnets. Each of the permanent magnets produces a magnetic flux flowing via the yoke sections the gap between which contains the permanent magnet under consideration. For example, the magnetic flux produced by the permanent magnet 114 flows via the yoke sections of the core elements that belong to the actuator elements 101 and 102. In figure 1a, flux-lines of the magnetic fluxes produced by the permanent magnets 114-117 are depicted with dashed lines. As shown in figure 1a, the directions of magnetization of the permanent magnets 114-117 are alternately clockwise and counter-clockwise so that adjacent ones of the permanent magnets generate magnetic flux in mutually opposite circumferential directions.

In the magnetic actuator 100 illustrated in figures 1a and 1b, each of the core elements comprises a stack of ferromagnetic sheets that are electrically insulated from each other. The ferromagnetic sheets are stacked in the z-direction of the coordinate system 199. Thus, each of the ferromagnetic sheets constitutes a part of the center tooth section, parts of the side tooth sections, and a part of the yoke section of the core element under consideration. Therefore, neither the magnetic fluxes produced by the permanent magnets 114-117 nor the magnetic fluxes produced by electric currents conducted by the windings 105-108 have to penetrate the ferromagnetic sheets but all the magnetic fluxes flow along the ferromagnetic sheets. It is, however, also possible that the core elements are made of ferrite or some other suitable material having sufficiently high magnetic permeability and sufficiently small electric conductivity. Also an outer portion 122 of the object 120 to be suspended can be composed of ferromagnetic sheets that are electrically insulated from each other and that are stacked in the z-direction of the coordinate system 199.

The magnetic suspension system comprises equipment for generating a position signal indicative of the position of the object 120 with respect to a pre-determined reference position of the object 120. The magnetic suspension system comprises a controller 119 for controlling the electrical operation of the windings 105-108 on the basis of the position signal. In this exemplifying case, the equipment for generating the position signal comprises inductive sensors 118 where the inductance of each sensor is dependent on the distance from the sensor under consideration to the surface of the object 120. The inductive sensors are illustrated in figure 1b. It is also possible that the equipment for generating the position signal comprises means 125 for forming the position signal on the basis of differences between the inductances of the actuator elements 101-104 supporting the object 120. The inductance of each actuator element can be estimated based on e.g. the rate of change of electric current di/dt when the voltage directed to the winding of the actuator element under consideration is changed in a step-wise manner. In this case, there is no need for the sensors 118.

In figure 1a, flux-lines of the magnetic fluxes produced by the permanent magnets 114-117 are depicted with dashed lines and exemplifying flux-lines of the magnetic fluxes produced by the electric currents conducted by the windings 105-108 are depicted with solid lines. As shown by the above-mentioned flux-lines, the controller 119 is configured to set the directions of the electric currents of the windings so that the magnetic fluxes generated by the electric currents have, in the center tooth sections of the core elements, same directions as the magnetic fluxes generated by the permanent magnets. In figure 1a, one of the center tooth sections are denoted with the reference number 110.

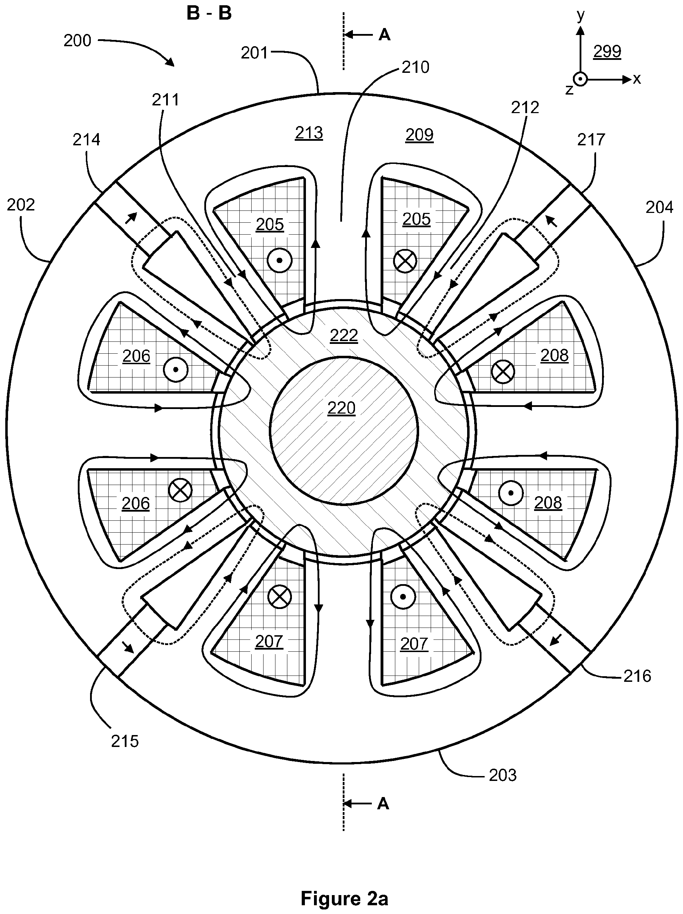

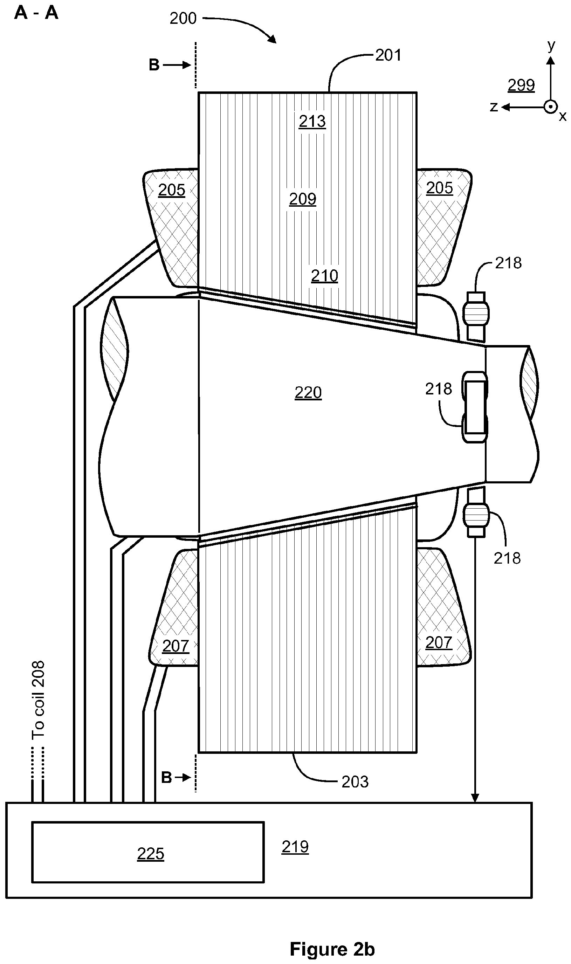

Figures 2a and 2b illustrate a magnetic suspension system according to an embodiment of the invention. Figure 2a shows a view of a section taken along a line B-B shown in figure 2b, and figure 2b shows a view of a section taken along a line A-A shown in figure 2a. The section plane corresponding to figure 2a is parallel with the xy-plane of a coordinate system 299, and the section plane corresponding to figure 2b is parallel with the yz-plane of the coordinate system 299. The magnetic suspension system comprises a magnetic actuator 200 for magnetically suspending an object 220. In the exemplifying case illustrated in figures 2a and 2b, the magnetic suspension system is a conical magnetic bearing for supporting the object 220 in radial directions perpendicular to the axis of rotational symmetry of the object 120 and also axially in the negative z-direction of the coordinate system 299. The axis of rotational symmetry is parallel with the z-axis of the coordinate system 299. The magnetic actuator 200 comprises actuator elements 201, 202, 203, and 204. Each of the actuator elements comprises a winding for conducting electric current and a core element comprising material whose relative magnetic permeability is greater than one. In figure 2a, the windings of the actuator elements are denoted with reference numbers 205, 206, 207, and 208, and the core element of the actuator element 201 is denoted with a reference number 209. Each core element comprises a center tooth section, side tooth sections on both sides of the center tooth section, and a yoke section connecting the center tooth section and the side tooth sections. In figures 2a and 2b, the center tooth section of the core element 209 is denoted with a reference number 210 and the yoke section of the core element 209 is denoted with a reference number 213. In figure 2a, the side tooth sections of the core element 209 are denoted with reference numbers 211 and 212. The winding of each actuator element is wound around the center tooth section of the core element that belongs to the actuator element under consideration. In the case illustrated in figures 2a and 2b, the end-surfaces of the center tooth sections and the end-surfaces of the side tooth sections are shaped to be congruent with a geometric circular cone surface so as to provide smooth air-gaps with the conical part of the rotationally symmetric object 220. Each of the core elements comprises advantageously a stack of ferromagnetic sheets that are electrically insulated from each other. The ferromagnetic sheets are stacked in the z-direction of the coordinate system 299. Also an outer portion 222 of the object 220 to be suspended can be composed of ferromagnetic sheets that are electrically insulated from each other and that are stacked in the z-direction of the coordinate system 299.

The magnetic actuator 200 further comprises permanent magnets 214, 215, 216, and 217 that are located in gaps between the yoke sections of adjacent ones of the core elements. For example, the permanent magnet 214 is located in the gap between the yoke sections of the core elements that belong to the actuator elements 201 and 202. The direction of magnetization of each of the permanent magnets is across the gap in which the permanent magnet under consideration is located. In figure 2a, the directions of magnetization of the permanent magnets 214-217 are depicted with arrows shown on the permanent magnets.

The magnetic suspension system comprises equipment for generating a position signal indicative of the position of the object 220 with respect to a pre-determined reference position of the object 220. The magnetic suspension system comprises a controller 219 for controlling the electrical operation of the windings 205-208 on the basis of the position signal. In this case, the equipment for generating the position signal comprises inductive sensors 218 where the inductance of each sensor is dependent on the distance from the sensor under consideration to the surface of the object 220. The inductive sensors are illustrated in figure 2b. The position of the object 220 in the x- and can be estimated on the basis the differences of the inductances of the sensors located on opposite sides of the object 220, and the position of the object 220 in the axial direction, i.e. in the z-direction, can be estimated on the basis of e.g. the average of the inductances of the sensors 218. The equipment for generating the position signal comprises advantageously also other sensors facing towards another conical surface of the object 220, where the other conical surface tapers in the positive z-direction. In this case, the position in the axial direction, i.e. in the z-direction, can be estimated on the basis of the differences between the inductances of the sensors 118 and the inductances of the other sensors. The other sensors and the other conical surface of the object 220 are not shown in figure 2. It is also possible that the equipment for generating the position signal comprises means 225 for forming the position signal on the basis of the inductances of the actuator elements 201-204 supporting the object 220. The inductance of each actuator element can be estimated based on e.g. the rate of change of electric current di/dt when the voltage directed to the winding of the actuator element under consideration is changed in a step-wise manner. In this case, there is no need for the sensors 218.

In figure 2a, exemplifying flux-lines of the magnetic fluxes produced by the permanent magnets 214-217 are depicted with dashed lines and exemplifying flux-lines of the magnetic fluxes produced by electric currents conducted by the windings 205-208 are depicted with solid lines. As shown by the above-mentioned exemplifying flux-lines, the controller 219 is configured to set the directions of the electric currents of the windings so that the magnetic fluxes generated by the electric currents have, in the side tooth sections of the core elements, same directions as the magnetic fluxes generated by the permanent magnets. In figure 2a, two of the side tooth sections are denoted with the reference numbers 211 and 212.

In the exemplifying cases illustrated in figures 1a, 1b, 2a, and 2b, the core elements constitute a ring structure where the center tooth sections and the side tooth sections are radially directed, the yoke sections are circumferentially directed, and the gaps between the yoke sections of the adjacent ones of the core elements are circumferential, and the directions of magnetization of the permanent magnets are circumferential.

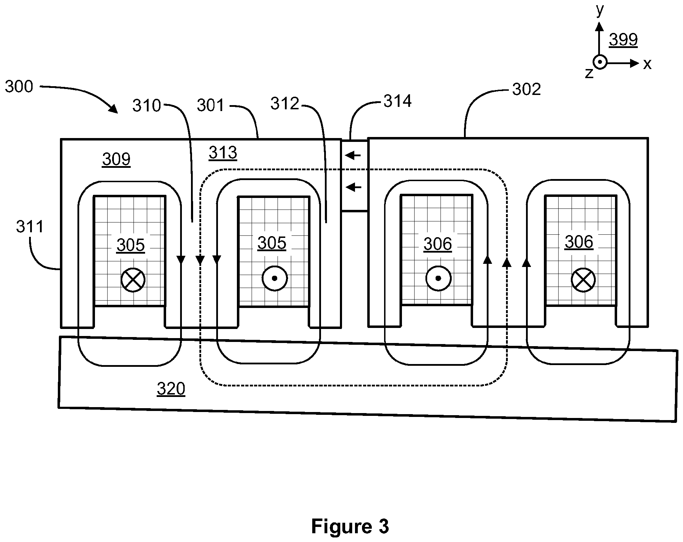

Figure 3 illustrates an example of a magnetic actuator 300 for a magnetic suspension system according to an exemplifying and non-limiting embodiment of the invention for magnetically suspending an object 320. Other systems and elements which are interacting with the object 320 are not shown in figure 3. The magnetic actuator 300 comprises actuator elements 301 and 302. Each of the actuator elements comprises a winding for conducting electric current and a core element comprising material whose relative magnetic permeability is greater than one. In figure 3, the windings of the actuator elements are denoted with reference numbers 305 and 306, and the core element of the actuator element 301 is denoted with a reference number 309. Each core element comprises a center tooth section, side tooth sections on both sides of the center tooth section, and a yoke section connecting the center tooth section and the side tooth sections. In figure 3, the center tooth section of the core element 309 is denoted with a reference number 310, the yoke section of the core element 309 is denoted with a reference number 313, and the side tooth sections of the core element 309 are denoted with reference numbers 311 and 312. The winding of each actuator element is wound around the center tooth section of the core element belonging to the actuator element under consideration. The magnetic actuator 300 comprises a permanent magnet 314 that is located in a gap between the yoke sections of the core elements. The direction of magnetization of the permanent magnet is across the gap. In figure 3, the direction of magnetization of the permanent magnet 314 are depicted with arrows shown on the permanent magnet. Each of the core elements comprises advantageously a stack of ferromagnetic sheets that are electrically insulated from each other. The ferromagnetic sheets are stacked in the z-direction of a coordinate system 399.

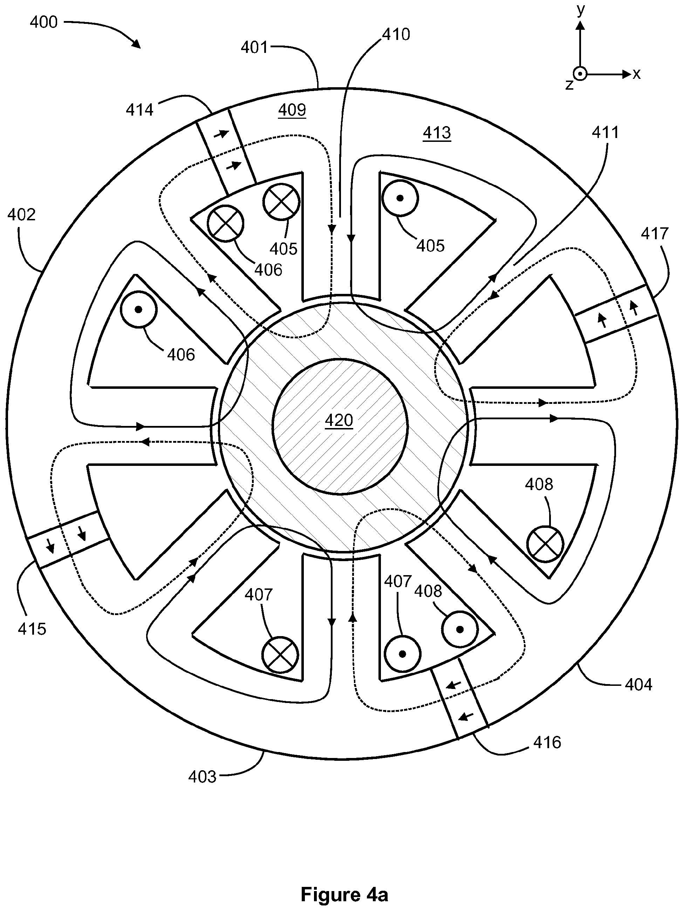

Figure 4a illustrates an exemplifying magnetic actuator 400 for magnetically suspending an object 420. The magnetic actuator 400 comprises actuator elements 401, 402, 403, and 404. Each of the actuator elements comprises a winding for conducting electric current and a core element comprising material whose relative magnetic permeability is greater than one. In figure 4a, the windings of the actuator elements are denoted with reference numbers 405, 406, 407, and 408, and the core element of the actuator element 401 is denoted with a reference number 409. In this exemplifying case, each core element comprises two tooth sections and a yoke section connecting the tooth sections. In figure 4a, the tooth sections of the core element 409 are denoted with reference numbers 410 and 411 and the yoke section of the core element 409 is denoted with a reference number 413. The winding of each actuator element is wound around one of the tooth sections of the core element that belongs to the actuator element under consideration.

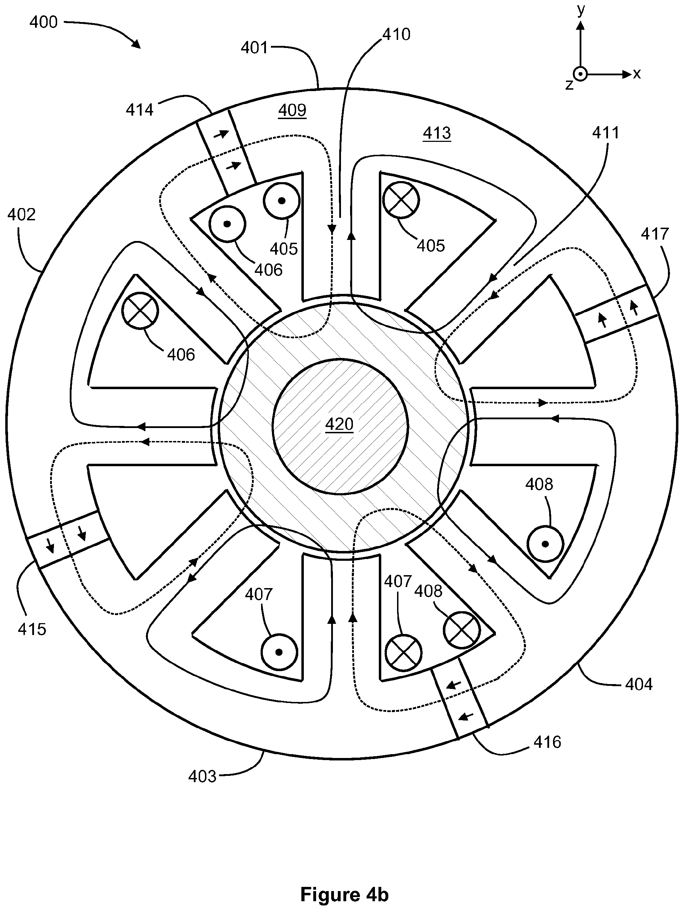

The magnetic actuator 400 further comprises permanent magnets 414, 415, 416, and 417 that are located in gaps between the yoke sections of adjacent ones of the core elements. For example, the permanent magnet 414 is located in the gap between the yoke sections of the core elements that belong to the actuator elements 401 and 402. The direction of magnetization of each of the permanent magnets is across the gap in which the permanent magnet under consideration is located. In figure 4a, the directions of magnetization of the permanent magnets 414-417 are depicted with arrows shown on the permanent magnets. Each of the permanent magnets produces a magnetic flux flowing via the yoke sections the gap between which contains the permanent magnet under consideration. For example, the magnetic flux produced by the permanent magnet 414 flows via the yoke sections of the core elements that belong to the actuator elements 401 and 402. In figure 4a, exemplifying flux-lines of the magnetic fluxes produced by the permanent magnets 414-417 are depicted with dashed lines and exemplifying flux-lines of the magnetic fluxes produced by the electric currents conducted by the windings 405-408 are depicted with solid lines. As can be seen from figure 4a, the yoke sections and the tooth sections of the core elements constitute paths for magnetic fluxes so that the main portions of the magnetic fluxes produced by the electric currents and directed to the object 420 do not have to flow through the permanent magnets 414-417. Figure 4b illustrates the magnetic actuator 400 in a situation in which the directions of the electric currents carried by the windings 405-408 are opposite to the directions of the electric currents occurring in the situation shown in figure 4a.

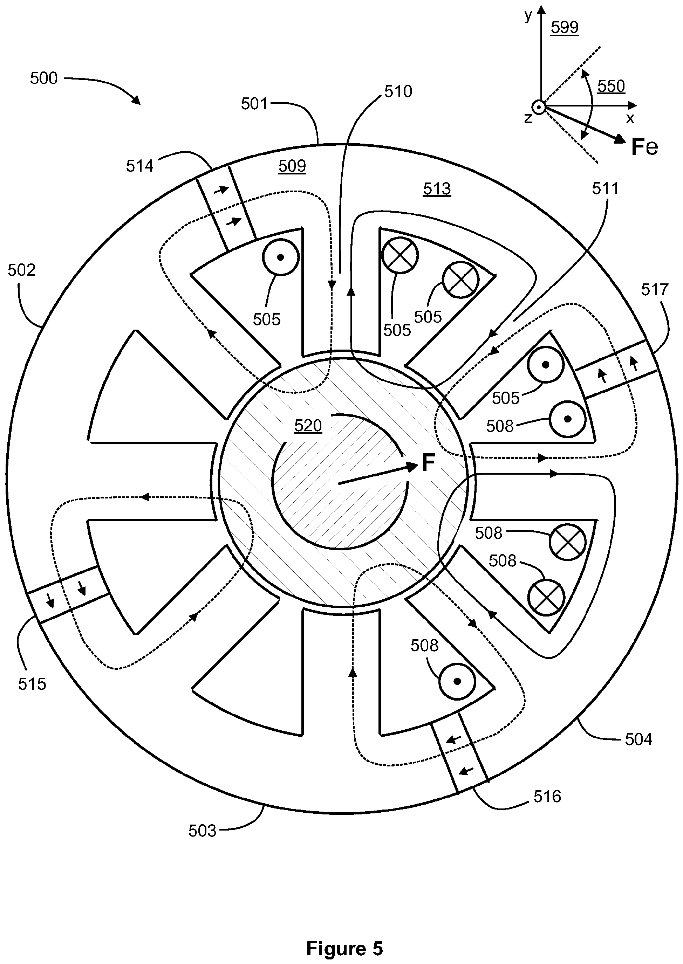

Figure 5 illustrates an exemplifying magnetic actuator 500 for magnetically suspending an object 520. The magnetic actuator 500 comprises actuator elements 501, 502, 503, and 504. Each of the actuator elements comprises a core element comprising material whose relative magnetic permeability is greater than one. In figure 5, the core element of the actuator element 501 is denoted with a reference number 509. In this exemplifying case, each core element comprises two tooth sections and a yoke section connecting the tooth sections. In figure 5, the tooth sections of the core element 509 are denoted with reference numbers 510 and 511 and the yoke section of the core element 509 is denoted with a reference number 513. In this exemplifying case, the actuator element 501 comprises a winding 505 for conducting electric current and the actuator element 504 comprises a winding 508 for conducting electric current, but the actuator elements 502 and 503 do not comprise any windings.

The magnetic actuator 500 further comprises permanent magnets 514, 515, 516, and 517 that are located in gaps between the yoke sections of adjacent ones of the core elements. For example, the permanent magnet 514 is located in the gap between the yoke sections of the core elements that belong to the actuator elements 501 and 502. The direction of magnetization of each of the permanent magnets is across the gap in which the permanent magnet under consideration is located. In figure 5, the directions of magnetization of the permanent magnets 514-517 are depicted with arrows shown on the permanent magnets. Each of the permanent magnets produces a magnetic flux flowing via the yoke sections the gap between which contains the permanent magnet under consideration. For example, the magnetic flux produced by the permanent magnet 514 flows via the yoke sections of the core elements that belong to the actuator elements 501 and 502. In figure 5a, exemplifying flux-lines of the magnetic fluxes produced by the permanent magnets 514-517 are depicted with dashed lines and exemplifying flux-lines of the magnetic fluxes produced by the electric currents conducted by the windings 505 and 508 are depicted with solid lines. In this case, it is assumed that only such force components Fe which are in a sector 550 of a coordinate system 599 have to be generated by the above-mentioned electric currents on the total force **F** acting on the object 520. As can be seen from figure 5, the yoke sections and the tooth sections of the core elements 501 and 504 constitute paths for magnetic fluxes so that the main portions of the magnetic fluxes produced by the electric currents and directed to the object 520 do not have to flow through the permanent magnets 514-517.

The embodiments provided in the description given above should not be construed as limiting the scope and/or the applicability of the appended claims.

## Claims

1. A magnetic suspension system comprising:
- an object (120, 220) having rotational symmetry, the object having a geometric circular cylinder surface or a geometric circular cone surface,
- at least one magnetic actuator (100, 200) for magnetically suspending the object,
- equipment (118, 218) for generating a position signal indicative of a position of the object with respect to a reference position of the object, and
- a controller (119, 219) for controlling the electrical operation of the windings of the magnetic actuator on the basis of the position signal,
wherein the magnetic actuator comprises actuator elements (101-104, 201-204) each comprising a winding (105, 205) for conducting electric current and a core element (109, 209) comprising material having relative magnetic permeability greater than one, the core element of each of the actuator elements comprising:
- two tooth sections for directing a magnetic flux produced by the electric current to the object to be controlled with the magnetic actuator, the tooth sections comprising a center tooth section (110, 210) and side tooth sections (111, 112, 211, 212) on both sides of the center tooth section, and
- a yoke section (113, 213) connecting the center and side tooth sections, wherein the magnetic actuator further comprises one or more permanent magnets (114-117, 214-217) located in one or more gaps between the yoke sections of adjacent ones of the core elements, a direction of magnetization of each of the permanent magnets being across the gap in which the permanent magnet under consideration is located and each of the permanent magnets producing a magnetic flux flowing via adjacent ones of the yoke sections the gap between which contains the permanent magnet under consideration, wherein the yoke section and the center and side tooth sections constitute a part of a closed path of the magnetic flux produced by the electric current so that the closed path is outside the one or more permanent magnets, wherein the core elements constitute a ring structure around the object so that the tooth sections are radially directed, the yoke sections are circumferentially directed, and the gaps between the yoke sections of the adjacent ones of the core elements are circumferential, and wherein the directions of magnetization of the permanent magnets are circumferential, and wherein the winding of each of the actuator elements is wound around the center tooth section only.

2. A magnetic suspension system according to claim 1, wherein the directions of magnetization of the permanent magnets are alternately clockwise and counter-clockwise so that adjacent ones of the permanent magnets generate magnetic flux in mutually opposite circumferential directions.

3. A magnetic suspension system according to claim 1 or 2, wherein end-surfaces of the tooth sections are congruent with the geometric circular cylinder surface.

4. A magnetic suspension system according to claim 1 or 2, wherein end-surfaces of the tooth sections are congruent with the geometric circular cone surface.

5. A magnetic suspension system according to any of claims 1-4, wherein each of the core elements (109, 209) comprises a stack of ferromagnetic sheets electrically insulated from each other, each of the ferromagnetic sheets constituting a part of each of the tooth sections of the core element under consideration and a part of the yoke section of the core element under consideration.

6. A magnetic suspension system according to any of claims 1-5, wherein the controller (119) is configured to set directions of electric currents of the windings of the magnetic actuator so that magnetic fluxes generated by the electric currents have, in the center tooth sections (110), same directions as the magnetic fluxes generated by the permanent magnets.

7. A magnetic suspension system according to any of claims 1-5, the controller (219) is configured to set directions of electric currents of the windings of the magnetic actuator so that magnetic fluxes generated by the electric currents have, in the side tooth sections (211, 212), same directions as the magnetic fluxes generated by the permanent magnets.

8. A magnetic suspension system according to claim 3, wherein the magnetic suspension system is a radial magnetic bearing.

9. A magnetic suspension system according to claim 4, wherein the magnetic suspension system is a conical magnetic bearing.

## Patentansprüche

1. Magnetisches Aufhängungssystem, umfassend:
- ein Objekt (120, 220) mit einer Drehsymmetrie, wobei das Objekt eine geometrische, kreisförmige, zylindrische Oberfläche oder eine geometrische, kreisförmige, kegelförmige Oberfläche aufweist,
- wenigstens einen magnetischen Aktuator (100, 200) zum magnetischen Aufhängen des Objekts,
- Ausrüstung (118, 218) zum Erzeugen eines Positionssignals, das eine Position des Objekts in Bezug auf eine Bezugsposition des Objekts anzeigt, und
- eine Steuerung (119, 219) zum Steuern des elektrischen Betriebs der Wicklungen des magnetischen Aktuators auf der Grundlage des Positionssignals,
wobei der magnetische Aktuator Aktuatorelemente (101-104, 201-204) umfasst, wobei jedes eine Wicklung (105, 205) zum Führen von elektrischem Strom und ein Kernelement (109, 209) umfasst, umfassend Material mit einer relativen magnetischen Durchlässigkeit, die größer ist als eins, wobei das Kernelement jedes Aktuatorelements umfasst:
- zwei Zahnabschnitte zum Richten eines magnetischen Flusses, der von dem elektrischen Strom zu dem Objekt gerichtet ist, das mit dem magnetischen Aktuator zu steuern ist, wobei die Zahnabschnitte einen zentralen Zahnbereich (110, 210) und seitliche Zahnbereiche (111, 112, 211, 212) auf beiden Seiten des zentralen Zahnabschnitts umfassen, und
- einen Jochabschnitt (113, 213), der den zentralen und die seitlichen Zahnabschnitt(e) anschließt,
wobei der magnetische Aktuator weiterhin einen oder mehrere Dauermagnet(en) (114-117, 214-217) umfasst, der/die in einer oder mehreren Lücke(n) zwischen den Jochabschnitten der anliegenden Kernelemente angesiedelt ist/sind, wobei eine Magnetisierungsrichtung jedes Dauermagneten durch die Lücke verläuft, in der der betrachtete Dauermagnet angeordnet ist, und jeder Dauermagnet einen Magnetfluss erzeugt, der über die anliegenden Jochabschnitte fließt, wobei die Lücke dazwischen den betrachteten Dauermagneten enthält, wobei der Jochabschnitt und der zentrale und die seitlichen Zahnabschnitt(e) einen Teil eines geschlossenen Pfades des Magnetflusses bilden, der von dem elektrischen Strom gebildet ist, sodass der geschlossene Pfad außerhalb des einen oder der mehreren Dauermagneten ist, wobei die Kernelemente eine Ringstruktur um das Objekt bilden, sodass die Zahnabschnitte radial gerichtet sind, die Jochabschnitte umfangseitig gerichtet sind und die Lücken zwischen den Jochabschnitten der anliegenden Kernelemente umfangseitig sind und wobei die Magnetisierungsrichtungen der Dauermagneten umfangseitig sind und wobei die Wicklung jedes Aktuatorelements nur um den zentralen Zahnabschnitt gewickelt ist.

2. Magnetisches Aufhängungssystem nach Anspruch 1, wobei die Magnetisierungsrichtungen der Dauermagneten abwechselnd im Uhrzeigersinn und gegen den Uhrzeigersinn verlaufen, sodass die anliegenden Dauermagneten einen Magnetfluss in gegenseitig entgegengesetzten umfangsgemäßen Richtungen verlaufen.

3. Magnetisches Aufhängungssystem nach Anspruch 1 oder 2, wobei die Endoberflächen der Zahnabschnitte mit der geometrischen, kreisförmigen, zylindrischen Oberfläche übereinstimmend sind.

4. Magnetisches Aufhängungssystem nach Anspruch 1 oder 2, wobei die Endoberflächen der Zahnabschnitte mit der geometrischen, kreisförmigen, kegelförmigen Oberfläche übereinstimmend sind.

5. Magnetisches Aufhängungssystem nach Anspruch 1-4, wobei jedes Kernelement (109, 209) einen Stapel von ferromagnetischen Blechen umfasst, die elektrisch voneinander isoliert sind, wobei jedes ferromagnetische Blech einen Teil jedes Zahnabschnitts des betrachteten Kernelements und einen Teil des Jochabschnitts des betrachteten Kernelements bildet.

6. Magnetisches Aufhängungssystem nach Anspruch 1-5, wobei die Steuerung (119) zum Einstellen von Richtungen von elektrischen Strömen der Wicklungen des magnetischen Aktuators derart ausgestaltet ist, dass die Magnetflüsse, die von den elektrischen Strömen erzeugt sind, in den zentralen Zahnabschnitten (110) dieselben Richtungen aufweisen wie die Magnetströme, die von den Dauermagnetgen erzeugt sind.

7. Magnetisches Aufhängungssystem nach irgendeinem der Ansprüche 1-5, wobei die Steuerung (219) zum Einstellen von Richtungen von elektrischen Strömen der Wicklungen des magnetischen Aktuators derart ausgestaltet ist, dass die Magnetflüsse, die von den elektrischen Strömen erzeugt sind, in den seitlichen Zahnabschnitten (211, 212) dieselben Richtungen aufweisen wie die Magnetflüsse, die von den Dauermagneten erzeugt sind.

8. Magnetisches Aufhängungssystem nach Anspruch 3, wobei das magnetische Aufhängungssystem ein radiales Magnetlager ist.

9. Magnetisches Aufhängungssystem nach Anspruch 4, wobei das magnetische Aufhängungssystem ein konisches Magnetlager ist.

## Revendications

1. Système de suspension magnétique comprenant :
- un objet (120, 220) comportant une symétrie rotationnelle, l'objet ayant une surface de cylindre circulaire géométrique ou une surface de cône circulaire géométrique,
- au moins un actionneur magnétique (100, 200) permettant de suspendre l'objet de manière magnétique,
- du matériel (118, 218) permettant de générer un signal de position indiquant une position de l'objet par rapport à une position de référence de l'objet, et
- un dispositif de commande (119, 219) permettant de commander le fonctionnement électrique des bobinages de l'actionneur magnétique sur la base du signal de position,
dans lequel l'actionneur magnétique comprend des éléments d'actionneur (101-104, 201-204) comprenant chacun un bobinage (105, 205) permettant de conduire le courant électrique et un élément de noyau (109, 209) comprenant un matériau ayant une perméabilité magnétique relative supérieure à un, l'élément de noyau de chacun des éléments d'actionneur comprenant :
- deux sections de dent permettant de diriger un flux magnétique produit par le courant électrique vers l'objet devant être contrôlé à l'aide de l'actionneur magnétique, les sections de dents comprenant une section de dent centrale (110, 210) et des sections de dent latérales (111, 112, 211, 212) situées de chaque côté de la section de dent centrale, et
- une section d'étrier (113, 213) reliant les sections de dent centrale et latérale,
dans lequel l'actionneur magnétique comprend en outre au moins un aimant permanent (114-117, 214-217) situé sur au moins un espace entre les sections d'étrier des aimants adjacents des éléments de noyau, une direction de magnétisation de chacun des aimants permanents se trouvant à travers l'espace dans lequel l'aimant permanent en question est situé et chacun des aimants permanents produisant un flux magnétique s'écoulant par l'intermédiaire d'aimants adjacents des sections d'étrier, l'espace entre ceux-ci contient l'aimant permanent en question, dans lequel la section d'étrier et les sections de dent centrale et latérale constituent une partie d'un chemin fermé du flux magnétique produit par le courant électrique de telle sorte que le chemin fermé se situe à l'extérieur de l'au moins un aimant permanent, dans lequel les éléments de noyau constituent une structure cyclique autour de l'objet de telle sorte que les sections de dent sont dirigées de manière radiale, les sections d'étrier sont dirigées de manière circonférentielle et les espaces entre les sections d'étrier des aimants adjacents des éléments de noyau sont circonférentiels, et dans lequel les directions de magnétisation des aimants permanents sont circonférentielles, dans lequel le bobinage de chacun des éléments d'actionneur est uniquement enroulé autour de la section de dent centrale.

2. Système de suspension magnétique selon la revendication 1, dans lequel les directions de magnétisation des aimants permanents sont alternativement dans le sens horaire et dans le sens anti-horaire de telle sorte que les aimants adjacents aux aimants permanents génèrent un flux magnétique dans des directions circonférentielles mutuellement opposées.

3. Système de suspension magnétique selon la revendication 1 ou la revendication 2, dans lequel les surfaces d'extrémité des sections de dent sont congruentes avec la surface de cylindre circulaire géométrique.

4. Système de suspension magnétique selon la revendication 1 ou la revendication 2, dans lequel les surfaces d'extrémité des sections de dent sont congruentes avec la surface de cône circulaire géométrique.

5. Système de suspension magnétique selon l'une quelconque des revendications 1 à 4, dans lequel chacun des éléments de noyau (109, 209) comprend un empilement de feuilles ferromagnétiques électriquement isolées les unes des autres, chacune des feuilles ferromagnétiques constituant une partie de chacune des sections de dent de l'élément de noyau en question et une partie de la section d'étrier de l'élément de noyau en question.

6. Système de suspension magnétique selon l'une quelconque des revendications 1 à 5, dans lequel le dispositif de commande (119) est conçu pour régler les directions des courants électriques des bobinages de l'actionneur magnétique de telle sorte que les flux magnétiques générés par le courant électrique comportent, dans les sections de dent centrales (110), les mêmes directions que les flux magnétiques générés par les aimants permanents.

7. Système de suspension magnétique selon l'une quelconque des revendications 1 à 5, dans lequel le dispositif de commande (219) est conçu pour régler les directions des courants électriques des bobinages de l'actionneur magnétique de telle sorte que les flux magnétiques générés par les courants électriques comportent, dans les sections de dent latérales (211, 212), les mêmes directions que les flux magnétiques générés par les aimants permanents.

8. Système de suspension magnétique selon la revendication 3, dans lequel le système de suspension magnétique est un palier magnétique radial.

9. Système de suspension magnétique selon la revendication 4, dans lequel le système de suspension magnétique est un palier magnétique conique.
